# FASCICULE DE BREVET EUROPEEN

(11) **EP 0 966 132 B1**
(45) Date de publication et mention de la délivrance du brevet: **16.02.2005**
(21) Numéro de dépôt: 99410077.4
(22) Date de dépôt: 15.06.1999
(51) Int. Cl.: H04L 27/227

(54) **Circuit de détection de verrouillage d'une boucle de synchronisation d'un démodulateur QPSK**
Verriegelungsdetektorschaltung für eine Synchronisierungsschleife in einem QPSK Demodulator
Circuit to detect lock of a synchronising loop in a QPSK demodulator

(30) Priorité: 16.06.1998 FR 9807721
(43) Date de publication de la demande: 22.12.1999
(73) Titulaire: STMicroelectronics S.A., 92120 Montrouge (FR)
(72) Inventeur: Meyer, Jacques, 38950 Saint Martin le Vinoux (FR)
(74) Mandataire: de Beaumont, Michel

(56) Documents cités:
- EP-A- 0 079 576
- US-A- 4 712 221
- US-A- 5 425 057
- S. INOUE ET. AL.: "DEVELOPMENT OF AN FEC COMBINED MODEM FOR DS-SSMA COMMUNICATION SYSTEM" GLOBECOM 90 IEEE GLOBAL TELECOMMUNICATIONS CONFERENCE AND EXHIBITION, vol. 2, 2 décembre 1990 (1990-12-02), pages 746-750, XP000220879 SAN DIEGO ,US

## Description

La présente invention concerne un démodulateur dit QPSK ("Quadrature Phase Shift Keying") permettant de transmettre simultanément deux signaux binaires I et Q sur deux porteuses de même fréquence mais en quadrature de phase. La présente invention vise plus particulièrement la détection de la synchronisation d'une horloge interne sur la fréquence de transmission des signaux binaires.

Dans un démodulateur QPSK, on cherche, d'une part à reconstruire le couple de signaux binaires tel qu'il a été émis, et d'autre part à extraire les valeurs binaires du couple de signaux reconstruits. La présente invention concerne essentielliement l'extraction des valeurs binaires.

EP-A-0 079 576 décrit une méthode de récupération de la porteuse d'un signal modulé en amplitude et en phase par des signaux numériques.

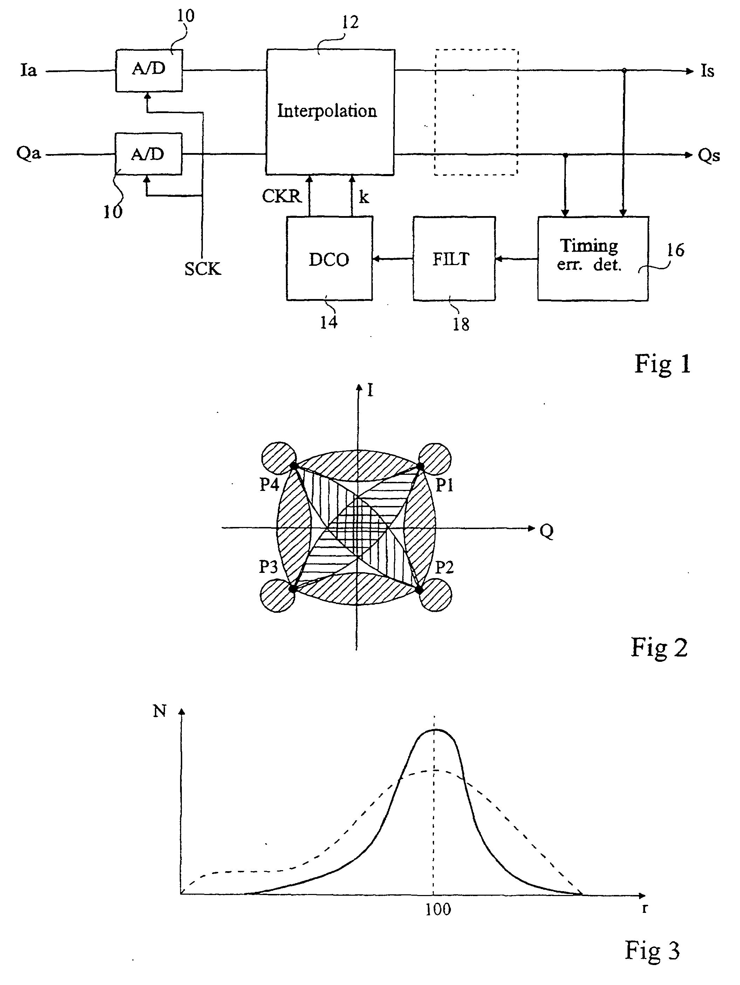

La figure 1 représente schématiquement la partie d'un démodulateur QPSK classique permettant d'extraire les valeurs binaires. Deux convertisseurs analogique/numérique 10 reçoivent respectivement deux signaux analogiques Ia et Qa correspondant au couple de signaux binaires I et Q après une démodulation grossière. Les convertisseurs 10 sont cadencés par une horloge SCK de fréquence supérieure à la vitesse de transmission des valeurs binaires par les signaux I et Q.

Les sorties des convertisseurs analogique/numérique 10 sont fournies à un filtre d'interpolation 12 destiné à calculer à partir des couples d'échantillons fournis par les convertisseurs 10, les valeurs (Is, Qs) correspondant à chaque couple de valeurs binaires transmises.

La sélection des échantillons Is et Qs est déterminée par une horloge reconstruite CKR synchronisée sur la transmission des valeurs binaires. En général, les fronts de l'horloge CKR, qui déterminent les échantillons à sélectionner, surviennent entre deux échantillons successifs. La position d'un front de l'horloge CKR entre deux échantillons est indiquée par un coefficient k permettant au filtre 12 d'interpoler la valeur de l'échantillon à sélectionner. Cette mesure est nécessaire, notamment lorsque la vitesse de transmission des valeurs binaires est proche de la fréquence d'échantillonnage des convertisseurs 10, car la reconstruction de l'horloge CKR dépend des variations d'amplitude des échantillons sélectionnés.

L'horloge CKR et le coefficient k sont fournis par un oscillateur à commande numérique 14 qui reçoit une consigne de fréquence d'un circuit de détection d'erreur de synchronisation 16 par l'intermédiaire d'un filtre passe-bas 18. Le circuit de détection d'erreur 16 calcule une valeur d'erreur numérique à partir des valeurs binaires Is et Qs fournies par le filtre d'interpolation 12. Ce circuit de calcul d'erreur 16 peut mettre en oeuvre un parmi de nombreux algorithmes de calcul d'erreur bien connus de la technique.

A l'aide de la boucle de synchronisation constituée des éléments 12 à 18, l'horloge CKR est synchronisée sur la transmission des valeurs binaires. Or, ces valeurs binaires sont fournies par une démodulation grossière. Il en résulte que la porteuse n'a pas été totalement supprimée des signaux transmis et que le vecteur de composantes Is et Qs tourne à une fréquence égale à l'erreur de fréquence de la démodulation. Cette erreur est supprimée par un circuit de correction de rotation qui peut être placé, comme cela est représenté en pointillés, entre le filtre 12 et le circuit de détection d'erreur 16, ou bien plus en aval.

Un problème qui se pose dans un tel démodulateur est que la vitesse de transmission des valeurs binaires peut varier dans de grandes proportions, de sorte que la boucle de synchronisation est généralement incapable de se resynchroniser après un changement de vitesse de transmission. Pour parvenir à une synchronisation, on procède généralement par essais successifs de fréquence et on utilise un détecteur de verrouillage pour indiquer que la bonne fréquence a été trouvée.

Un premier type de détecteur de verrouillage classique utilise le signal d'erreur de synchronisation fourni par le circuit 16 et indique un verrouillage lorsque cette erreur devient inférieure à un seuil. Toutefois, lorsque les conditions de réception sont mauvaises, il s'avère qu'il n'y a pas de différence significative entre un signal d'erreur d'un système verrouillé et celui d'un système non verrouillé.

Pour éviter ce problème, un autre type de détecteur de verrouillage utilise un algorithme d'analyse de la stabilité de la fréquence instantanée. Cependant, cette analyse est peu fiable seule et nécessite une confirmation par de nombreux recoupements, ce qui rend cette solution particulièrement complexe et longue à réagir.

Un objet de la présente invention est de prévoir une détection de verrouillage qui réagisse rapidement et qui soit fiable même dans des mauvaises conditions de réception.

Cet objet est atteint grâce à un procédé de détection de verrouillage d'une boucle de synchronisation d'une horloge interne sur la transmission de couples de valeurs provenant d'une démodulation QPSK. Il comprend les étapes consistant à calculer le module de chaque vecteur ayant comme composantes les deux valeurs de chaque couple ; à comparer le module à un seuil inférieur au module théorique ;et à déterminer la condition de verrouillage en fonction de la proportion des modules trouvés supérieurs ou inférieurs au seuil par rapport au nombre de modules comptabilisés.

Selon un mode de réalisation de la présente invention, le procédé comprend les étapes consistant à incrémenter le seuil d'une valeur prédéterminée A si le module est supérieur au seuil ; à décrémenter le seuil d'une valeur prédéterminée B supérieure à la valeur A si le module est inférieur au seuil ; et à déterminer la condition de verrouillage à partir de la valeur du seuil atteinte pour un nombre prédéterminé de couples de valeurs.

Selon un mode de réalisation de la présente invention, une condition de verrouillage est détectée lorsque le seuil est supérieur à une valeur limite constante.

Selon un mode de réalisation de la présente invention, une condition de verrouillage est en outre détectée lorsque le seuil est inférieur à la valeur limite et qu'une variation forcée de la fréquence de l'horloge interne provoque un abaissement significatif du seuil.

La présente invention prévoit également un circuit de détection de verrouillage d'une boucle de synchronisation d'une horloge interne sur une transmission de couples de valeurs provenant d'une démodulation QPSK, comprenant un circuit de calcul du module de chaque vecteur ayant comme composantes les deux valeurs de chaque couple ; un registre contenant un seuil ; un comparateur du seuil contenu dans le registre au module fourni par le circuit de calcul ; des moyens pour incrémenter le contenu du registre d'une valeur prédéterminée A lorsque le module est supérieur au seuil et décrémenter le contenu du registre d'une valeur prédéterminée B supérieure à la valeur A lorsque le module est inférieur au seuil ; et un circuit d'analyse du seuil contenu dans le registre pour déterminer la condition de verrouillage.

Selon un mode de réalisation de la présente invention, les valeurs A et B sont choisies de manière que le rapport A/A+B soit égal à la probabilité souhaitée pour que le module soit inférieur au seuil.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement une partie d'un démodulateur QPSK classique destinée à régénérer la fréquence de transmission des signaux modulés ;
la figure 2 représente une constellation de quatre points correspondant aux valeurs théoriques transmissibles par un signal modulé en QPSK, ainsi que des zones d'apparition probable des points dans des conditions réelles ;
la figure 3 représente des distributions de distances à l'origine des points de la constellation dans le cas d'un système verrouillé et dans le cas d'un système non verrouillé ;
la figure 4 représente schématiquement un mode de réalisation de détecteur de verrouillage selon l'invention ; et
la figure 5 représente des zones d'équiprobabilité de verrouillage et de non verrouillage en fonction du rapport signal sur bruit de la transmission et d'une distance de référence à l'origine des points de la constellation.

La figure 2 représente une constellation de quatre points P1 à P4 illustrant les quatre combinaisons théoriques possibles du couple de valeurs (Is, Qs) fourni par un démodulateur QPSK du type de la figure 1. Les points P1 à P4 apparaissant dans un système réel s'éloignent d'autant plus des points représentés en figure 2 que le système est perturbé ou loin de la condition de verrouillage. Les points réels ont une probabilité d'apparition maximale dans des zones hachurées en figure 2.

La présente invention est basée sur une analyse des positions des points de la constellation d'un système réel. Lorsque le système est verrouillé et que les signaux ont subi une correction de rotation adéquate, les points ont une forte probabilité d'apparaître au voisinage des points théoriques, cette probabilité diminuant lorsque le rapport signal sur bruit de la transmission se détériore.

En l'absence de correction de rotation, les points ont une probabilité élevée d'apparaître à une distance fixe de l'origine.

Lorsque le système n'est pas verrouillé, les points se dispersent de manière qu'ils ont une probabilité relativement élevée d'apparaître à proximité de l'origine de la constellation.

La figure 3 représente, en trait plein, un exemple de distribution des distances r à l'origine des points de la constellation pour un système verrouillé et, en pointillés, la même distribution pour un système non verrouillé. La distance 100 correspond à la distance théorique. On remarque ici plus clairement que la probabilité d'apparition de points proches de l'origine est significativement plus élevée pour le système non verrouillé.

Selon la présente invention, on observe un nombre suffisant de points consécutifs et on considère que le système est verrouillé lorsque la proportion de points proches de l'origine est inférieure à un seuil.

On pourrait pour cela choisir un seuil fixe. Toutefois, il s'avère que les distributions illustrées en figure 3 changent en fonction du rapport signal sur bruit de la transmission. En particulier, les distributions s'élargissent et s'aplatissent lorsque le bruit augmente, de sorte qu'un seuil convenable pour un rapport signal sur bruit donné ne convient plus pour un autre rapport signal sur bruit. De plus, le rapport signal sur bruit est a priori inconnu.

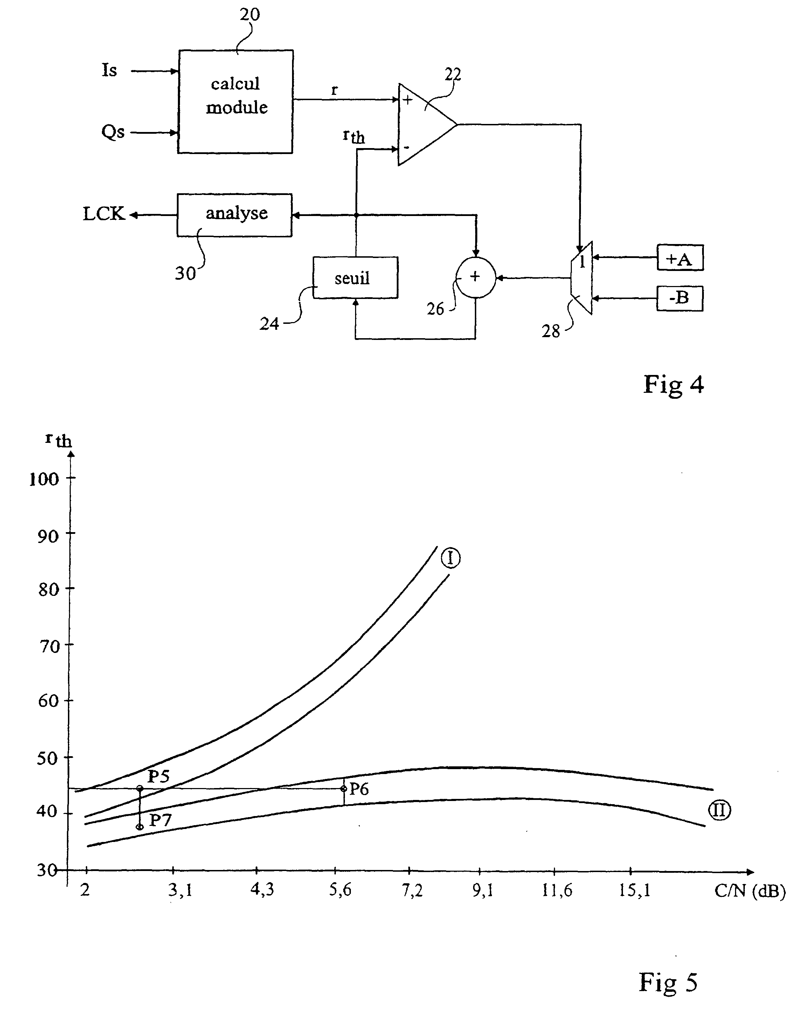

La figure 4 représente schématiquement un mode de réalisation de circuit de détection de verrouillage selon l'invention qui évite les inconvénients liés à un rapport signal sur bruit inconnu. Un circuit 20 reçoit le couple de valeurs Is et Qs fournies par le démodulateur (figure 1) et calcule le module r du vecteur ayant pour composantes les valeurs Is et Qs. Ainsi, la valeur r est la distance à l'origine de la constellation du point correspondant aux valeurs Is et Qs. Un comparateur 22 compare cette distance r à une distance seuil rₜₕ contenue dans un registre 24. Le contenu du registre 24, donc la distance seuil rₜₕ, est modifié en fonction du résultat de la comparaison. Plus spécifiquement, lorsque la distance r est supérieure à la distance seuil rₜₕ, le contenu du registre 24 est incrémenté d'une valeur A. Dans le cas contraire, il est décrémenté d'une valeur B supérieure à A. Pour cela, un additionneur 26 met à jour le contenu du registre 24 par la somme de ce même contenu et de la sortie d'un multiplexeur 28. Le multiplexeur 28 reçoit la valeur A sur une première entrée et la valeur -B sur une deuxième entrée. Le comparateur 22 commande le multiplexeur 28 pour sélectionner la valeur A ou -B adéquate.

Avec cette configuration, après avoir comptabilisé un nombre suffisant de points, le seuil rₜₕ s'établit à une valeur telle que la proportion des distances r trouvées en dessous du seuil rₜₕ est égale à A/A+B. En d'autres termes, le seuil rₜₕ est automatiquement ajusté à une valeur telle que la probabilité d'avoir une distance inférieure au seuil rₜₕ soit égale au rapport A/A+B.

Un circuit 30 analyse l'évolution du seuil contenu dans le registre 24 et active un signal de verrouillage LCK lorsque ce seuil correspond à des critères particuliers décrits ci-dessous.

La figure 5 représente deux bandes d'équiprobabilité, l'une I correspondant à un système verrouillé et l'autre II correspondant à un système non verrouillé, en fonction du rapport signal sur bruit de la transmission. Chaque bande d'équiprobabilité correspond à une probabilité constante déterminée par les incréments A et B et fournit, pour un rapport signal sur bruit donné, la plage dans laquelle doit s'établir le seuil rₜₕ. Les dimensions représentées à titre d'exemple à la figure 5 correspondent à une probabilité de 1/16 pour que la distance r soit inférieure au seuil rₜₕ.

On observe dans cette figure 5 qu'il est pratiquement sûr que le système est verrouillé si le seuil rₜₕ s'établit à une valeur supérieure à 50. Ainsi, le circuit d'analyse 30 active le signal de verrouillage LCK lorsque le seuil rₜₕ devient supérieur à 50. On observe également qu'il est pratiquement sûr que le système est non verrouillé si le seuil rₜₕ s'établit à une valeur inférieure à 40.

Il subsiste une plage d'incertitude de 40 à 50. En effet, dans cette plage, un même seuil peut correspondre à un état verrouillé avec un faible rapport signal sur bruit et à un état non verrouillé avec un rapport signal sur bruit plus élevé. La figure 5 illustre ceci par deux points de même seuil 45 et dont l'un, P5, est à un rapport signal sur bruit inférieur à 3 dB et l'autre, P6, à un rapport signal sur bruit de l'ordre de 5,6 dB. Dans un tel cas d'ambiguïté, il suffit que le circuit d'analyse 30 force la fréquence de l'oscillateur 14 (figure 1) à une valeur nettement différente de sa valeur courante et relève de nouveau le seuil rₜₕ.

Si le seuil rₜₕ bouge peu, c'est que la condition du système ne change pas. Le système ne pouvait être que non verrouillé. Le seuil rₜₕ reste dans les limites de la bande II. Il est très peu probable qu'en effectuant un saut de fréquence arbitraire on passe d'une condition non verrouillée à une condition verrouillée et donc que le point P6 passe, après le changement de fréquence, dans la bande I.

Si par contre le seuil rₜₕ s'abaisse significativement après le changement de fréquence, cela signifie que la condition de fonctionnement du système a changé, à savoir qu'il est passé de l'état verrouillé à l'état non verrouillé. Ceci est illustré à la figure 5 par un point P7 de seuil inférieur à 40. Dans ce cas, le circuit 30 rétablit la fréquence initiale et active le signal de verrouillage LCK.

De bons résultats sont obtenus pour un rapport A/A+B compris entre 1/20 et 1/10. Pour des valeurs faibles du rapport, la bande II devient plus croissante, alors que pour des valeurs élevées, la bande I devient moins croissante et plus large.

On remarquera que le circuit de calcul 20 peut recevoir les valeurs Is et Qs tout de suite en sortie du filtre d'interpolation 12, ou bien après correction de rotation. En effet, l'erreur de rotation n'a aucune influence sur les calculs de distance.

Une détection de verrouillage selon l'invention nécessite l'observation d'un nombre de points suffisamment élevé, quelques milliers, pour être représentatif de la condition de fonctionnement du système, mais ce nombre de points reste nettement inférieur à celui que requièrent les solutions classiques, des dizaines de milliers.

## Revendications

1. Procédé de détection de verrouillage d'une boucle de synchronisation d'une horloge interne (CKR) sur la transmission de couples de valeurs (Is, Qs) provenant d'une démodulation QPSK, **caractérisé en ce qu'**il comprend les étapes suivantes :
- calculer le module (r) de chaque vecteur ayant comme composantes les deux valeurs de chaque couple ;
- comparer le module à un seuil (rₜₕ) inférieur au module théorique ; et
- déterminer la condition de verrouillage en fonction de la proportion des modules trouvés supérieurs ou inférieurs au seuil par rapport au nombre de modules comptabilisés.

2. Procédé de détection de verrouillage selon la revendication 1, **caractérisé en ce qu'**il comprend les étapes suivantes :
- incrémenter le seuil d'une valeur prédéterminée A si le module est supérieur au seuil ;
- décrémenter le seuil d'une valeur prédéterminée B supérieure à la valeur A si le module est inférieur au seuil ; et
- déterminer la condition de verrouillage à partir de la valeur du seuil atteinte pour un nombre prédéterminé de couples de valeurs.

3. Procédé de détection de verrouillage selon la revendication 2, **caractérisé en ce que** les valeurs A et B sont choisies de manière que le rapport A/A+B soit égal à la probabilité souhaitée pour que le module soit inférieur à la valeur du seuil atteinte.

4. Procédé de détection de verrouillage selon la revendication 2, **caractérisé en ce qu'**une condition de verrouillage est détectée lorsque le seuil est supérieur à une valeur limite constante.

5. Procédé de détection de verrouillage selon la revendication 4, **caractérisé en ce qu'**une condition de verrouillage est en outre détectée lorsque le seuil est inférieur à la valeur limite et qu'une variation forcée de la fréquence de l'horloge interne provoque un abaissement significatif du seuil.

6. Circuit de détection de verrouillage d'une boucle de synchronisation d'une horloge interne (CKR) sur une transmission de couples de valeurs (Is, Qs) provenant d'une démodulation QPSK, **caractérisé en ce qu'**il comprend :
- un circuit (20) de calcul du module (r) de chaque vecteur ayant comme composantes les deux valeurs (Is, Qs) de chaque couple ;
- un registre (24) contenant un seuil (rₜₕ) ;
- un comparateur (22) du seuil contenu dans le registre au module fourni par le circuit de calcul ;
- des moyens (26, 28) pour incrémenter le contenu du registre d'une valeur prédéterminée A lorsque le module est supérieur au seuil et décrémenter le contenu du registre d'une valeur prédéterminée B supérieure à la valeur A lorsque le module est inférieur au seuil ; et
- un circuit (30) d'analyse du seuil contenu dans le registre pour déterminer la condition de verrouillage.

7. Circuit de détection de verrouillage selon la revendication 6, **caractérisé en ce que** les valeurs A et B sont choisies de manière que le rapport A/A+B soit égal à la probabilité souhaitée pour que le module soit inférieur au seuil.

## Patentansprüche

1. Verfahren zum Detektieren einer Verriegelung einer Synchronisationsschleife einer internen Uhr (CKR) bei der Übertragung von Wertepaaren (Is, Qs), die bei einer QPSK-Demodulation geliefert werden, **dadurch gekennzeichnet, dass** es die folgenden Schritte aufweist:
- Berechnen des Moduls (r) jedes Vektors, der als Komponenten die beiden Werte eines jeden Paares aufweist;
- Vergleichen des Modules mit einer Schwelle (rₜₕ), die kleiner als ein theoretischer Modul ist; und
- Bestimmen der Verriegelungsbedingung als Funktion des Verhältnisses der Module, die größer oder kleiner als die Schwelle gefunden wurden, zu der Anzahl der ermittelten Module.

2. Verfahren zum Detektieren einer Verriegelung nach Anspruch 1, **dadurch gekennzeichnet, dass** es die folgenden Schritte aufweist:
- Erhöhen der Schwelle um einen vorbestimmten Wert A, wenn der Modul größer als die Schwelle ist;
- Verringern der Schwelle um einen vorbestimmten Wert B, der größer als der Wert A ist, wenn der Modul kleiner als die Schwelle ist; und
- Bestimmen der Verriegelungsbedingung ausgehend von dem Wert der Schwelle, der für eine vorbestimmte Anzahl von Wertepaaren erhalten worden ist.

3. Verfahren zum Detektieren einer Verriegelung nach Anspruch 2, **dadurch gekennzeichnet, dass** die Werte A und B so gewählt werden, dass das Verhältnis A/A+B gleich der gewünschten Wahrscheinlichkeit ist, dass das Modul kleiner als der Wert der erhaltenen Schwelle ist.

4. Verfahren zum Detektieren einer Verriegelung nach Anspruch 2, **dadurch gekennzeichnet, dass** eine Verriegelungsbedingung detektiert wird, wenn die Schwelle größer als ein konstanter Grenzwert ist.

5. Verfahren zum Detektieren einer Verriegelung nach Anspruch 4, **dadurch gekennzeichnet, dass** eine Verriegelungsbedingung darüber hinaus detektiert wird, wenn die Schwelle kleiner als der Grenzwert ist und eine erzwungene Variierung der Frequenz der internen Uhr eine signifikante Absenkung der Schwelle verursacht.

6. Schaltung zum Detektieren einer Verriegelung einer Synchronisationsschleife einer internen Uhr (CKR) bei einer Übermittlung von Wertepaaren (Is, Qs), die von einer QPSK-Demodulation stammen, **dadurch gekennzeichnet, dass** sie aufweist:
- eine Schaltung (20) zum Berechnen des Moduls (r) eines jedes Vektors, der als Komponenten die beiden Werte (Is, Qs) eines jeden Paares hat;
- einen Speicher (24), der eine Schwelle (rₜₕ) enthält;
- einen Komparator (22) zum Vergleichen der in dem Speicher enthaltenen Schwelle mit dem durch die Rechenschaltung gelieferten Modul;
- Einrichtungen (26, 28) zum Anheben des Inhaltes des Speichers um einen vorbestimmten Wert A, wenn der Modul größer als die Schwelle ist, und zum Absenken des Inhaltes des Speichers um einen vorbestimmten Wert B, der größer als der Wert A ist, wenn der Modul kleiner als die Schwelle ist; und
- eine Schaltung (30) zur Analyse der in dem Speicher enthaltenen Schwelle, um die Verriegelungsbedingung zu bestimmen.

7. Schaltung zum Detektieren einer Verriegelung nach Anspruch 6, **dadurch gekennzeichnet, dass** die Werte A und B so gewählt sind, dass das Verhältnis A/A+B gleich der gewünschten Wahrscheinlichkeit ist, dass der Modul kleiner als die Schwelle ist.

## Claims

1. A method for detecting the lock-in of a loop for synchronizing an internal clock (CKR) on the transmission of pairs of values (Is, Qs) provided by a QPSK demodulator, **characterized in that** it includes the steps of:
- calculating the module (r) of each vector having as components the two values of each pair;
- comparing the module with a threshold (rₜₕ) smaller than a theoretical module; and
- determining the lock-in condition according to the ratio of the number of modules found to be greater than or smaller than the threshold to the total number of modules.

2. The lock-in detection method of claim 1, including the steps of:
- incrementing the threshold by a predetermined value A if the module is greater than the threshold;
- decrementing the threshold by a predetermined value B greater than value A if the module is lower than the threshold; and
- determining the lock-in condition based on the threshold value reached for a predetermined number of value pairs.

3. The lock-in detection method of claim 2, wherein values A and B are chosen so that ratio A/A+B is equal to the desired probability for the module to be smaller than the reached threshold value.

4. The lock-in detection method of claim 2, wherein a lock-in condition is detected when the threshold is greater than a constant limit value.

5. The lock-in detection method of claim 4, wherein a lock-in condition is further detected when the threshold is lower than the limit value and a forced variation of the internal clock frequency causes a significant decrease of the threshold.

6. A circuit for detecting the lock-in of a loop for synchronizing an internal clock (CKR) on a transmission of pairs of values (Is, Qs) provided by a QPSK demodulation, **characterized in that** it includes:
- a circuit (20) for calculating the module (r) of each vector having as components the two values (Is, Qs) of each pair;
- a register (24) containing a threshold (rₜₕ);
- a comparator (22) of the threshold contained in the register with the module provided by the calculation circuit;
- means (26, 28) for incrementing the content of the register by a predetermined value A when the module is greater than the threshold and decrementing the content of the register by a predetermined value B greater than value A when the module is smaller than the threshold; and
- a circuit (30) for analyzing the threshold contained in the register to determine the lock-in condition.

7. The lock-in detection circuit of claim 6, wherein values A and B are chosen so that ratio A/A+B is equal to the desired probability for the module to be smaller than the threshold.
